(19) Europäisches Patentamt
European Patent Office
Office européen des brevets

(11) EP 1 526 772 B1

(12) EUROPÄISCHE PATENTSCHRIFT

(45) Veröffentlichungstag und Bekanntmachung des Hinweises auf die Patenterteilung:
**20.12.2006 Patentblatt 2006/51**

(21) Anmeldenummer: **03764925.8**

(22) Anmeldetag: **30.06.2003**

(51) Int Cl.:
***A01N 43/32*** (2006.01) ***A01N 47/12*** (2006.01)

(86) Internationale Anmeldenummer:
**PCT/EP2003/006891**

(87) Internationale Veröffentlichungsnummer:
**WO 2004/008856 (29.01.2004 Gazette 2004/05)**

(54) **FUNGIZIDE MISCHUNGEN**
FUNGICIDAL MIXTURES
MELANGES FONGICIDES

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**LT LV**

(30) Priorität: **23.07.2002 DE 10233520**

(43) Veröffentlichungstag der Anmeldung:
**04.05.2005 Patentblatt 2005/18**

(73) Patentinhaber: **BASF Aktiengesellschaft
67056 Ludwigshafen (DE)**

(72) Erfinder:
- **AMMERMANN, Eberhard
64646 Heppenheim (DE)**
- **STIERL, Reinhard
67251 Freinsheim (DE)**
- **SCHÖFL, Ulrich
68782 Brühl (DE)**
- **SCHELBERGER, Klaus
67161 Gönnheim (DE)**
- **SCHERER, Maria
76829 Godramstein (DE)**
- **HENNINGSEN, Michael
67227 Frankenthal (DE)**
- **GOLD, Randall, Even
67283 Obrigheim (DE)**

(56) Entgegenhaltungen:
**EP-A- 0 610 764**
**EP-A- 1 028 125**
**WO-A-01/44215**
**WO-A-01/62083**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft fungizide Mischungen, enthaltend

A) mindestens ein Valinamidderivat der Formel I

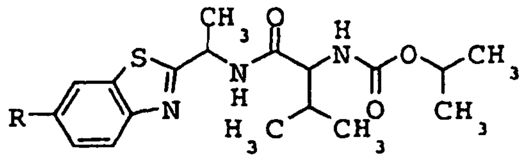

I

in der R Halogen bedeutet,
und

B) die Verbindung der Formel II

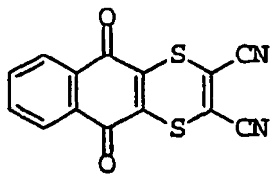

II

in einer synergistisch wirksamen Menge.

Außerdem betrifft die Erfindung Verfahren zur Bekämpfung von Schadpilzen mit Mischungen der Verbindungen I und II und die Verwendung der Verbindungen I und II zur Herstellung derartiger Mischungen.

Die Verbindungen der Formel I, ihre Herstellung und ihre Wirkung gegen Schadpilze sind in JP-A 09/323 984 beschrieben.

Die Verbindung II, (common name: dithianon) sowie Verfahren zu ihrer Herstellung sind ebenfalls aus der Literatur bekannt [vgl. GB-A 857 383].

Aus EP-A 610 764 sind fungizide Mischungen von bestimmten phenylsubstituierten Valinamiden mit u. a. Dithianon bekannt.

Ihre Wirkung, insbesondere die Dauerwirkung, ist jedoch in vielen Fällen nicht zufriedenstellend.

Dokument WO-A-0144215 beschreibt synergistische Mischungen von Benthiavalicarb mit einer Reihe fungizider Mischungspartner. Aus WO-A-0162083 sind synergistische Mischungen von 4-Alkylphenylethyl- und 6-Halogen-1,3-benzothiazol-2-ylethyl-substituierten Valinamidderivaten mit Benzophenonen bekannt.

Im Hinblick auf eine Senkung der Aufwandmengen und eine Verbreiterung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung, insbesondere eine verbesserte Dauerwirkung, gegen Schadpilze zeigen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen I und II oder bei Anwendung der Verbindungen I und II nacheinander Schadpilze besser bekämpfen lassen als mit den Einzelverbindungen.

In Formel I bedeutet R ein Halogenatom, wie Fluor, Chlor, Brom oder Jod, insbesondere Fluor.

Die Erfindung betrifft sämtliche Stereoisomere der Formel I. Bevorzugt ist das R,S-Isomere.

Für die erfindungsgemäßen Mischungen wird die Verbindung Ia (common name: benthiavalicarb) besonders bevorzugt.

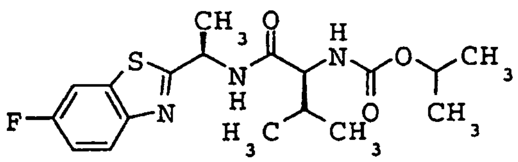

Ia

Üblicherweise setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und II bzw. die gleichzeitige gemeinsame oder getrennte Verwendung der Verbindungen I und II zeichnen sich durch eine hervorragende Wirkung gegen ein breites Spektrum von pflanzenpathogenen Pilzen, insbesondere aus der Klasse der *Ascomyceten, Deuteromyceten, Oomyceten* und *Basidiomyceten*, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Gemüsepflanzen (z.B. Gurken, Bohnen und Kürbisgewächse), Obstpflanzen, Wein, Weizen, Zierpflanzen, Zuckerrohr und einer Vielzahl von Samen.

Insbesondere eignen sie sich zur Bekämpfung der folgenden pflanzenpathogenen Pilze: *Erysiphe cichoracearum* und *Sphaerotheca fuliginea* an Kürbisgewächsen, *Podosphaera leucotricha* an Äpfeln, *Uncinula necator* an Reben, *Venturia inaequalis* (Schorf) an Äpfeln, Septoria tritici an Weizen, *Botrytis cinerea* (Grauschimmel) an Erdbeeren, Gemüse, Zierpflanzen und Reben, *Cercospora arachidicola* an Erdnüssen, *Phytophthora infestans* an Kartoffeln und Tomaten, *Pseudoperonospora*-Arten an Kürbisgewächsen und Hopfen, *Plasmopara viticola* und *Phomopsis viticula* an Reben, *Alternaria*-Arten an Gemüse und Obst sowie *Fusarium*- und *Verticillium*-Arten.

Die Verbindungen I und II können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 1:100 bis 10:1, vorzugsweise 1:20 bis 5:1, insbesondere 1:15 bis 2:1 angewandt.

Die Aufwandmengen der erfindungsgemäßen Mischungen liegen je nach Art des gewünschten Effekts für die Verbindungen I bei 5 g/ha bis 500 g/ha, vorzugsweise 50 bis 500 g/ha, insbesondere 50 bis 200 g/ha.

Die Aufwandmengen für die Verbindung II liegen entsprechend in der Regel bei 5 bis 2000 g/ha, vorzugsweise 10 bis 1000 g/ha, insbesondere 50 bis 750 g/ha.

Bei der Saatgutbehandlung werden im allgemeinen Aufwandmengen an Mischung von 0,001 bis 1 g/kg Saatgut, vorzugsweise 0,01 bis 0,5 g/kg, insbesondere 0,01 bis 0,1 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen I und II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I und II bzw. der Mischung aus den Verbindungen I und II. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I und II bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Beispiele für solche Zubereitungen, welche die Wirkstoffe enthalten, sind:

I. eine Lösung aus 90 Gew.-Teilen der Wirkstoffe und 10 Gew.-Teilen N-Methylpyrrolidon, die zur Anwendung in Form kleinster Tropfen geeignet ist;

II. eine Mischung aus 20 Gew.-Teilen der Wirkstoffe, 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure, 5 Gew.-Teilen des Anlagerungsproduktes von 40 Mol Ethylenoxid an 1 Mol Ricinusöl; durch feines Verteilen der Lösung in Wasser erhält man eine Dispersion;

III.eine wäßrige Dispersion aus 20 Gew.-Teilen der Wirkstoffe, 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl;

IV. eine wäßrige Dispersion aus 20 Gew.-Teilen der Wirkstoffe, 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl;

V. eine in einer Hammermühle vermahlene Mischung aus 80 Gew.-Teilen der Wirkstoffe, 3 Gew.-Teilen des Natriumsalzes der Diisobutylnaphthalin-1-sulfonsäure, 10 Gew.-Teilen des Natriumsalzes einer Ligninsulfonsäure aus einer Sulfitablauge und 7 Gew.-Teilen pulverförmigem Kieselsäuregel; durch feines Verteilen der Mischung in Wasser erhält man eine Spritzbrühe;

VI. eine innige Mischung aus 3 Gew.-Teilen der Wirkstoffe und 97 Gew.-Teilen feinteiligem Kaolin; dieses Stäubemittel enthält 3 Gew.-% Wirkstoff;

VII.eine innige Mischung aus 30 Gew.-Teilen der Wirkstoffe, 92 Gew.-Teilen pulverförmigem Kieselsäuregel und 8 Gew.-Teilen Paraffinöl, das auf die Oberfläche dieses Kieselsäuregels gesprüht wurde; diese Aufbereitung gibt dem Wirkstoff eine gute Haftfähigkeit;

VIII. eine stabile wäßrige Dispersion aus 40 Gew.-Teilen der Wirkstoffe, 10 Gew.-Teilen des Natriumsalzes eines Phenolsulfonsäure-Harnstoff-Formaldehyd-Kondensates, 2 Gew.-Teilen Kieselgel und 48 Gew.-Teilen Wasser, die weiter verdünnt werden kann;

IX. eine stabile ölige Dispersion aus 20 Gew.-Teilen der Wirkstoffe, 2 Gew.-Teilen des Calciumsalzes der Dodecylbenzolsulfonsäure, 8 Gew.-Teilen Fettalkohol-polyglykolether, 20 Gew.-Teilen des Natriumsalzes eines Phenolsulfonsäure-Harnstoff-Formaldehydkondensates und 88 Gew.-Teilen eines paraffinischen Mineralöls.

Die fungizide Wirkung der Verbindung und der Mischungen läßt sich durch folgende Versuche zeigen:

Die Wirkstoffe wurden getrennt oder gemeinsam als eine Stammlösung aufbereitet mit 0,25 Gew.-% Wirkstoff in Aceton oder DMSO. Dieser Lösung wurde 1 Gew.-% Emulgator Uniperol® (Netzmittel mit Emulgier- und Dispergierwirkung auf der Basis ethoxylierter Alkylphenole) zugesetzt und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet.

Der Wirkungsgrad (W) wird nach der Formel von Abbot wie folgt berechnet:

$$W = (1 - \alpha/\beta) \cdot 100$$

$\alpha$ entspricht dem Pilzbefall der behandelten Pflanzen in % und

β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.
Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.
Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Anwendungsbeispiel 1: Wirksamkeit gegen die Krautfäule an Tomaten verursacht durch *Phytophthora infestans*
Blätter von Topfpflanzen der Sorte "Große Fleischtomate St. Pierre" wurden mit einer wässriger Suspension in der unten angegebenen Wirkstoffkonzentration bis zur Tropfnässe besprüht. Am folgenden Tag wurden die Blätter mit einer kalten wässrigen Zoosporenaufschwemmung von *Phytophthora infestans* mit einer Dichte von 0,25 x $10^6$ Sporen/ml infiziert. Anschließend wurden die Pflanzen in einer wasserdampfgesättigten Kammer bei Temperaturen zwischen 18 und 20°C aufgestellt. Nach 6 Tagen hatte sich die Krautfäule auf den unbehandelten, jedoch infizierten Kontrollpflanzen so stark entwickelt, dass der Befall visuell in % ermittelt werden konnte.

Tabelle A - Einzelwirkstoffe

| Beispiel | Wirkstoff | Wirkstoffkonzentration in der Spritzbrühe [ppm] | Wirkungsgrad in % der unbehandelten Kontrolle |
|---|---|---|---|
| 1 | Kontrolle (unbehandelt) | (90 % Befall) | 0 |
| 2 | Ia (Benthiavalicarb) | 3<br>1,5<br>0,75<br>0,375<br>0,19 | 89<br>83<br>78<br>67<br>56 |
| 3 | II (Dithianon) | 7,5<br>3,75<br>1,9 | 0<br>0<br>0 |

Tabelle B - erfindungsgemäße Kombinationen

| Beispiel | Wirkstoffmischung Konzentration Mischungsverhältnis | beobachteter Wirkungsgrad | berechneter Wirkungsgrad*) |
|---|---|---|---|
| 4 | Ia + II<br>0,75 + 7,5 ppm<br>1 : 10 | 100 | 78 |
| 5 | Ia + II<br>0,375 + 3,75 ppm<br>1 : 10 | 100 | 67 |

(fortgesetzt)

| Beispiel | Wirkstoffmischung Konzentration Mischungsverhältnis | beobachteter Wirkungsgrad | berechneter Wirkungsgrad*) |
|---|---|---|---|
| 6 | Ia + II<br>0,19 + 1,9 ppm<br>1 : 10 | 100 | 56 |
| 7 | Ia + II<br>1,5 + 1,9 ppm<br>1 : 1,25 | 100 | 83 |
| 8 | Ia + II<br>3 + 1,9 ppm<br>1,6 : 1 | 100 | 89 |
| *) berechneter Wirkungsgrad nach der Colby-Formel | | | |

Anwendungsbeispiel 2: Dauerwirkung gegen Rebenperonospora verursacht durch *Plasmopara viticola*

Blätter von Topfreben der Sorte "Müller-Thurgau" wurden mit wässriger Suspension in der unten angegebenen Wirkstoffkonzentration bis zur Tropfnässe besprüht. Um die Dauerwirkung der Substanzen beurteilen zu können, wurden die Pflanzen nach dem Antrocknen des Spritzbelages für 3 Tage im Gewächshaus aufgestellt. Erst dann wurden die Blätter mit einer wässrigen Zoosporenaufschwemmung von *Plasmopara viticola* inokuliert. Danach wurden die Reben zunächst für 48 Stunden in einer wasserdampfgesättigten Kammer bei 24°C und anschließend für 5 Tage im Gewächshaus bei Temperaturen zwischen 20 und 30°C aufgestellt. Nach dieser Zeit wurden die Pflanzen zur Beschleunigung des Sporangienträgerausbruchs abermals für 16 Stunden in eine feuchte Kammer gestellt. Dann wurde das Ausmaß der Befallsentwicklung auf den Blattunterseiten visuell ermittelt.

Tabelle C - Einzelwirkstoffe

| Beispiel | Wirkstoff | Wirkstoffkonzentration in der Spritzbrühe [ppm] | Wirkungsgrad in % der unbehandelten Kontrolle |
|---|---|---|---|
| 9 | Kontrolle (unbehandelt) | (96 % Befall) | 0 |
| 10 | Ia (Benthiavalicarb) | 3<br>1,5<br>0,375<br>0,19 | 84<br>79<br>58<br>48 |
| 11 | II (Dithianon) | 3,75<br>1,9 | 58<br>48 |

Tabelle D - erfindungsgemäße Kombinationen

| Beispiel | Wirkstoffmischung Konzentration Mischungsverhältnis | beobachteter Wirkungsgrad | berechneter Wirkungsgrad*) |
|---|---|---|---|
| 12 | Ia + II<br>0,375 + 3,75 ppm<br>1 : 10 | 90 | 82 |
| 13 | Ia + II<br>0,19 + 1,9 ppm<br>1 : 10 | 84 | 73 |
| 14 | Ia + II<br>1,5 + 1,9 ppm<br>1 : 1,25 | 100 | 73 |

(fortgesetzt)

| Beispiel | Wirkstoffmischung Konzentration Mischungsverhältnis | beobachteter Wirkungsgrad | berechneter Wirkungsgrad*) |
|---|---|---|---|
| 15 | Ia + II<br>3 + 1,9 ppm<br>1,6 : 1 | 100 | 92 |
| *) berechneter Wirkungsgrad nach der Colby-Formel | | | |

Aus den Ergebnissen der Versuche geht hervor, daß der beobachtete Wirkungsgrad in allen Mischungsverhältnissen höher ist, als nach der Colby-Fozznel vorausberechnet.

## Patentansprüche

1. Fungizide Mischungen, enthaltend

   A) mindestens ein Valinamidderivat der Formel I

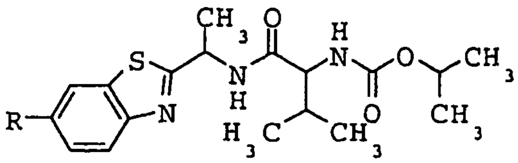

I

   in der R Halogen bedeutet,
   und
   B) die Verbindung der Formel II

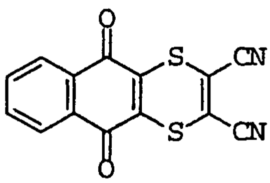

II

   in einer synergistisch wirksamen Menge.

2. Fungizide Mischungen nach Anspruch 1, **dadurch gekennzeichnet, daß** als Valinamidderivat I die Verbindung Ia

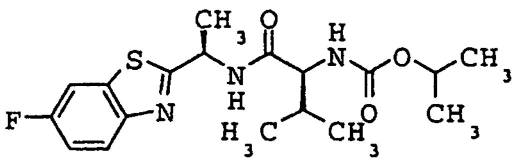

Ia

   enthalten ist.

3. Fungizide Mischungen nach den Ansprüchen 1 oder 2, **dadurch gekennzeichnet, daß** das Gewichtsverhältnis der Verbindung I zu der Verbindung II 10:1 bis 1:100 ist.

4. Fungizides Mittel, enthaltend einen festen oder flüssigen Trägerstoff und eine Mischung gemäß Anspruch 1.

5. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einer Verbindung der Formel I und der Verbindung der Formel II gemäß Anspruch 1 behandelt.

6. Verfahren nach Anspruch 5, **dadurch gekennzeichnet, daß** man die Schadpilze, deren Lebensraum oder die von ihnen freizuhaltenden Pflanzen, Samen, Böden, Flächen, Materialien oder Räume mit 5 bis 500 g/ha einer Verbindung I gemäß Anspruch 1 behandelt.

7. Verfahren nach Anspruch 5, **dadurch gekennzeichnet, daß** man die Schadpilze, deren Lebensraum oder die von ihnen freizuhaltenden Pflanzen, Samen, Böden, Flächen, Materialien oder Räume mit 5 bis 2000 g/ha der Verbindung II gemäß Anspruch 1 behandelt.

8. Verwendung der Verbindungen der Formeln I und II gemäß Anspruch 1 zur Herstellung einer Mischung gemäß Anspruch 1.

## Claims

1. A fungicidal mixture, comprising

A) at least one valinamide derivative of the formula I

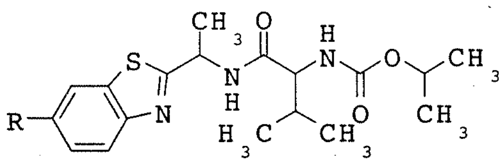

I

in which R is halogen,
and
B) the compound of the formula II

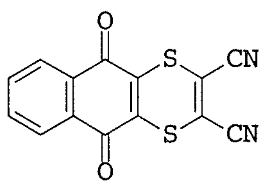

II

in a synergistically effective amount.

2. The fungicidal mixture according to claim 1, which comprises, as valinamide derivative I, the compound Ia

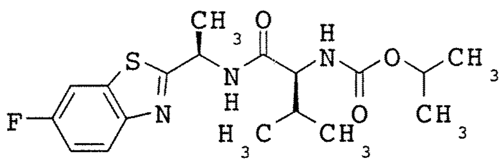

Ia

3. The fungicidal mixture according to claim 1 or 2, wherein the weight ratio of the compound I to the compound II is from 10:1 to 1:100.

4. A fungicide composition comprising a solid or liquid carrier and a mixture according to claim 1.

5. A method for controlling harmful fungi, which comprises treating the harmful fungi, their habitat, or the plants, seeds, soils, areas, materials or spaces to be kept free from them with a compound of the formula I and the compound of the formula II according to claim 1.

6. The method according to claim 5, which comprises treating the harmful fungi, their habitat, or the plants, seeds, soils, areas, materials, or spaces to be kept free from them with from 5 to 500 g/ha of the compound I according to claim 1.

7. The method according to claim 5, which comprises treating the harmful fungi, their habitat, or the plants, seeds, soils, areas, materials or spaces to be kept free from them with from 5 to 2000 g/ha of the compound II according to claim 1.

8. The use of the compounds of the formulae I and II according to claim 1 for preparing a mixture according to claim 1.

**Revendications**

1. Mélanges fongicides contenant

A) au moins un dérivé de valinamide de formule I :

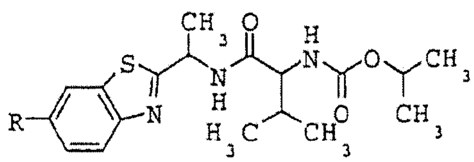

I

dans laquelle R est un halogène,
et
B) le composé de formule II :

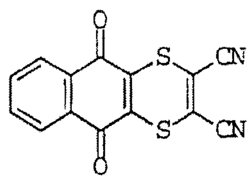

II

en quantité efficace au plan synergique.

2. Mélanges fongicides selon la revendication 1, **caractérisés en ce que** le composé Ia est contenu comme dérivé de valinamide I :

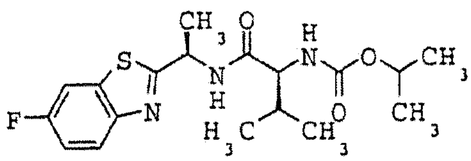

Ia

3. Mélanges fongicides selon la revendication 1 ou 2, **caractérisés en ce que** le rapport pondéral du composé I au composé II est de 10:1 à 1:100.

4. Agent fongicide contenant un véhicule solide ou liquide et un mélange selon la revendication 1.

5. Procédé pour lutter contre des champignons nuisibles, **caractérisé en ce qu'**on traite les champignons nuisibles,

leur biotope ou les plantes, semences, sols, surfaces, matériels ou espaces qui doivent en être protégés avec un composé de formule I et le composé de formule II selon la revendication 1.

**6.** Procédé selon la revendication 5, **caractérisé en ce qu'**on traite les champignons nuisibles, leur biotope ou les plantes, semences, sols, surfaces, matériels ou espaces qui doivent en être protégés avec 5 à 500 g/ha d'un composé I selon la revendication 1.

**7.** Procédé selon la revendication 5, **caractérisé en ce qu'**on traite les champignons nuisibles, leur biotope ou les plantes, semences, sols, surfaces, matériels ou espaces qui doivent en être protégés avec 5 à 2000 g/ha du composé II selon la revendication 1.

**8.** Utilisation des composés de formules I et II selon la revendication 1 pour fabriquer un mélange selon la revendication 1.